# FASCICULE DE BREVET EUROPEEN

(11) **EP 1 232 831 B1**
(45) Date de publication et mention de la délivrance du brevet: **10.12.2003**
(21) Numéro de dépôt: 02360056.2
(22) Date de dépôt: 08.02.2002
(51) Int. Cl.: B23P 19/04

(54) **Dispositif de montage automatique de deux demi-cones sur une tige de soupape**
Vorrichtung zur automatischen Montage von zwei Halbkegeln auf einem Ventilschaft
Device for automatically assembling two half-cones on a valve stem

(30) Priorité: 20.02.2001 FR 0102244
(43) Date de publication de la demande: 21.08.2002
(73) Titulaire: Industrie Automation S.A., 68190 Ensisheim (FR)
(72) Inventeur: Schmitt, Hubert, 68720 Zillisheim (FR)
(74) Mandataire: Nithardt, Roland

(56) Documents cités:
- DE-C- 3 138 147
- DE-U- 8 901 174
- US-A- 4 494 306
- US-A- 5 097 579
- PATENT ABSTRACTS OF JAPAN vol. 010, no. 163 (M-487), 11 juin 1986 (1986-06-11) -& JP 61 014825 A (SANKIYOU SEIKI SEISAKUSHO:KK), 23 janvier 1986 (1986-01-23)

## Description

La présente invention concerne un dispositif de montage automatique de deux demi-cônes sur une tige de soupape, ce dispositif étant agencé pour être monté sur une machine d'assemblage, ces demi-cônes comportant au moins une nervure intérieure destinée à se loger dans au moins une rainure extérieure de ladite tige, ces demi-cônes étant agencés pour se loger dans un alésage formé dans une coupelle montée sur ladite tige et en appui sur un ressort de rappel associé à ladite soupape, ce dispositif comportant au moins une pince de préhension des demi-cônes, une broche de poussée agencée pour appuyer sur ladite coupelle et comprimer ledit ressort de rappel pour réaliser le montage desdits demi-cônes, et des moyens de commande de ladite pince de préhension, ladite pince de préhension et ladite broche de poussée étant coaxiales.

La publication US-A-5,097,579 décrit un tel dispositif.

Il est bien connu que la liaison entre une soupape d'un moteur à combustion interne, d'un compresseur ou de toute autre machine équivalente, et un ressort de rappel qui rappelle la soupape contre son siège est le plus souvent réalisée par une coupelle bloquée par deux demi-cônes pourvus de nervures qui s'emboîtent dans des rainures correspondantes prévues sur la tige de la soupape.

Le dispositif de montage, tel que décrit ci-dessus, est bien connu notamment dans le domaine de l'industrie automobile et équipe généralement des machines ou robots permettant de monter sur une même ligne d'assemblage des soupapes avec leur ressort de rappel, leur coupelle et leurs demi-cônes dans une culasse de moteur. La diversité des moteurs à combustion interne se traduit entre autre par des différences de diamètres et de positions des soupapes et par des dimensions différentes des ressorts. Par ailleurs, l'augmentation des performances des moteurs à combustion interne se traduit par une réduction de la masse des pièces en mouvement. De ce fait, les dimensions des demi-cônes sont de plus en plus petites, ce qui demande de plus en plus de précision dans leur manipulation et dans leur montage.

Les lignes d'assemblage connues sont généralement étudiées et équipées pour un type particulier de moteur, ce qui signifie qu'il faut une ligne d'assemblage par type de moteur. Il existe quelques lignes d'assemblage équipées de plusieurs dispositifs de montage, chacun de ces dispositifs étant dédié à un type de moteur en particulier, mais ces dispositifs sont très complexes, encombrants et d'un investissement lourd.

Dans le but de réduire les coûts de production, on cherche à rendre les machines et les lignes d'assemblage de plus en plus flexibles pour pouvoir assembler différents types de moteur sur une même ligne d'assemblage.

Les dispositifs de montage connus ne permettent pas d'obtenir cette souplesse. En effet, les pièces à assembler, telles que les demi-cônes, étant très spécifiques et de surcroît de très petites tailles, l'outillage est étudié avec une précision extrême et ne peut convenir à des demi-cônes de dimensions différentes. De plus, ces dispositifs de montage sont souvent équipés de plusieurs outils montés en parallèle et utilisés pour assembler simultanément plusieurs soupapes en ligne. De ce fait, un changement d'entraxe de ces soupapes impose obligatoirement un changement d'outil.

La présente invention vise à pallier ces inconvénients en proposant un dispositif de montage automatique des demi-cônes sur une tige de soupape, rendant possible cette flexibilité dans le but de pouvoir, sur une même ligne d'assemblage, assembler différents types de moteur à moindre coût avec un dispositif simple, facile à mettre en oeuvre, fiable, précis, peu encombrant, pouvant équiper aussi bien des nouvelles lignes d'assemblage que des lignes d'assemblage déjà en service.

Dans ce but, l'invention concerne un dispositif de montage du genre indiqué en préambule, caractérisé en ce qu'il comporte une partie fixe, appelée porte-outil, agencée pour être montée sur ladite machine d'assemblage et une partie amovible, appelée outil, agencée pour être montée temporairement sur ledit porte-outil et pour être interchangeable, ledit outil comportant un corps dans lequel sont montés au moins ladite pince de préhension et ladite broche de poussée et ledit porte-outil comportant une plate-forme dans laquelle sont montés lesdits moyens de commande de la pince de préhension.

Dans une forme de réalisation préférée, ce dispositif comporte des moyens d'indexage et de verrouillage dudit outil sur ledit porte-outil. Les moyens d'indexage peuvent comporter au moins un doigt de positionnement solidaire de l'outil ou du porte-outil et agencé pour se loger dans au moins un alésage prévu respectivement dans le porte-outil ou l'outil.

Les moyens de verrouillage peuvent comporter au moins un verrou solidaire de l'outil ou du porte-outil et agencé pour se loger dans au moins une gâche prévue respectivement dans le porte-outil ou l'outil quand ledit outil est monté sur ledit porte-outil, ce verrou étant associé à un organe de déverrouillage agencé pour retirer ledit verrou de ladite gâche et permettre le démontage dudit outil. Ce verrou peut comporter au moins un barillet mobile agencé pour déplacer au moins une bille dans ladite gâche.

Dans la forme de réalisation préférée, la pince de préhension comporte deux doigts de préhension, identiques, disposés symétriquement par rapport à un premier plan médian passant par l'axe de l'outil et s'étendant au-delà dudit outil dans ledit porte-outil, chaque doigt de préhension étant monté pivotant dans ledit corps de l'outil autour d'un axe de pivotement fixe.

Cette pince de préhension est, avantageusement, constituée d'une pince à succion, chaque doigt de préhension étant traversé par au moins un alésage intérieur formant un conduit d'aspiration agencé pour être relié à une source de vide. Chaque axe de pivotement peut comporter au moins un alésage intérieur agencé pour être en communication avec celui du doigt de préhension correspondant, et le corps dudit outil peut comporter aussi au moins un alésage intérieur agencé pour être en communication d'une part avec celui dudit axe de pivotement et d'autre part avec un alésage prévu en correspondance dans la plate-forme dudit porte-outil et relié à ladite source de vide, l'ensemble de ces alésages intérieurs formant un conduit d'aspiration.

De préférence, les moyens de commande de ladite pince de préhension sont agencés pour rapprocher les extrémités libres des doigts de préhension s'étendant dans ledit porte-outil et placer la pince de préhension en position ouverte, lesdits doigts de préhension étant assujettis à au moins un organe de rappel disposé entre eux et agencés pour éloigner lesdites extrémités libres des doigts de préhension et replacer la pince de préhension en position fermée. Ces moyens de commande peuvent comporter au moins une pince pneumatique disposée dans ledit porte-outil et dont les mors encadrent lesdites extrémités libres correspondantes des doigts de préhension.

Dans la forme de réalisation préférée, la broche de poussée est évidée et forme deux profilés identiques, disposés symétriquement par rapport à un second plan médian passant par l'axe de l'outil et perpendiculaire audit premier plan médian, ladite broche de poussée étant montée de manière fixe dans ledit corps de l'outil.

Cette broche de poussée est, avantageusement, agencée pour former des moyens de préhension à succion d'une coupelle associée auxdits demi-cônes, chaque profilé étant traversé par au moins un alésage intérieur formant un conduit d'aspiration agencé pour être relié à une source de vide. Le corps de l'outil peut comporter au moins un alésage intérieur agencé pour être en communication d'une part avec celui du profilé correspondant et d'autre part avec un alésage prévu en correspondance dans la plate-forme dudit porte-outil et relié à ladite source de vide, l'ensemble de ces alésages intérieurs formant un conduit d'aspiration.

Dans une variante de réalisation, le dispositif de montage comporte une pince de préhension d'un ressort associé auxdits demi-cônes et des moyens de commande de cette pince, ladite pince de préhension du ressort étant coaxiale à ladite pince de préhension des demi-cônes et à la dite broche de poussée, ledit outil comportant ladite pince et ledit porte-outil comportant lesdits moyens de commande.

Cette pince de préhension du ressort peut comporter deux mors de préhension, identiques, disposés symétriquement par rapport au second plan médian, chaque mors de préhension étant monté pivotant dans ledit corps de l'outil autour d'un axe de pivotement fixe. Chaque mors comporte, avantageusement, un bras de levier s'étendant perpendiculairement au second plan médian, ce bras de levier comportant ledit axe de pivotement et étant assujetti à un organe de rappel par rapport au corps de l'outil agencé pour rapprocher lesdits mors de préhension et placer ladite pince en position fermée.

Par ailleurs, chaque mors de préhension peut être articulé à une tige d'actionnement se prolongeant dans ledit porte-outil et en ce que les moyens de commande de ladite pince de préhension du ressort sont agencés pour pousser lesdites tiges d'actionnement, dans l'axe dudit outil, écarter lesdits mors de préhension et placer la pince en position ouverte. Les moyens de commande peuvent comporter au moins un vérin dont la tige est couplée à une plaque d'appui agencée pour appuyer sur lesdites tiges d'actionnement.

La présente invention et ses avantages apparaîtront mieux dans la description suivante d'un exemple de réalisation, en référence aux dessins annexés, dans lesquels :
- la figure 1 représente une vue d'ensemble d'une ligne d'assemblage de culasses pour moteurs à combustion interne, comportant le dispositif de montage selon l'invention,
- les figures 2A et 2B sont des vues en coupe axiale du dispositif de l'invention selon un axe passant par la pince de préhension des demi-cônes et illustrant deux positions de montage, la figure 2B étant partielle et agrandie,
- la figures 3A et 3B sont des vues en coupe axiale du dispositif de l'invention selon un axe passant par la pince de préhension des ressorts et illustrant deux positions de montage, la figure 3A étant prise suivant l'axe III-III de la figure 2A, et
- la figure 4 est une section radiale de l'outil suivant l'axe IV-IV de la figure 2B.

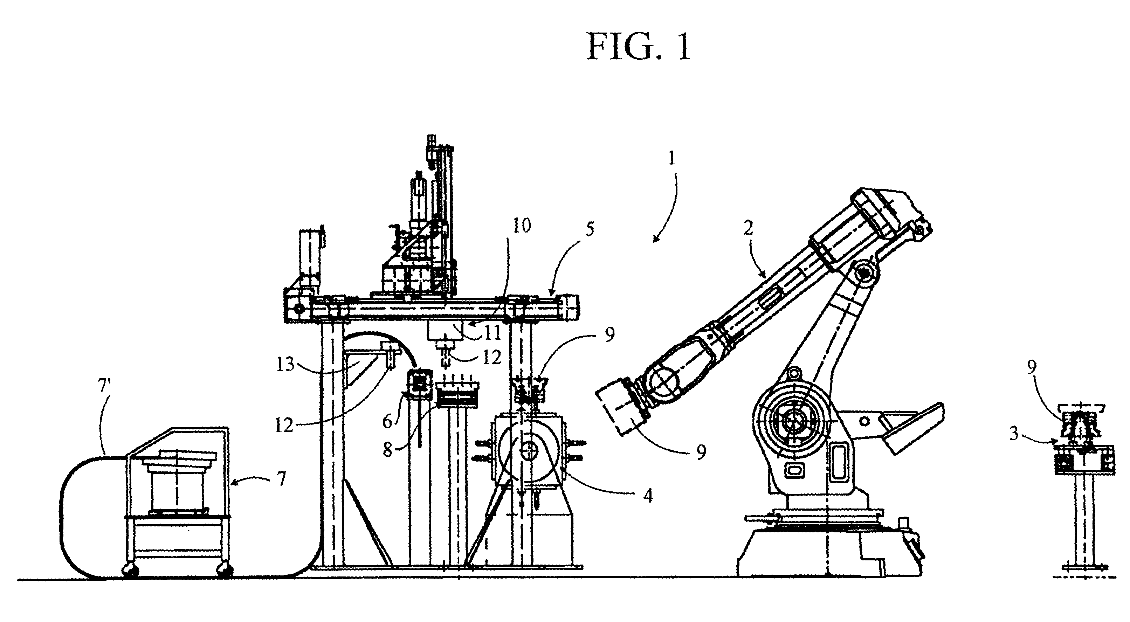

La figure 1 illustre un exemple de ligne d'assemblage 1 de culasses pour moteurs à combustion interne. Cette ligne comporte notamment :
◆ un robot de préhension 2 apte à prélever une culasse 9 sur un convoyeur 3 et à la déposer sur un barillet porte culasse 4,
◆ un portique 5 sur lequel est fixé le dispositif de montage 10, selon l'invention, de sorte que ce dispositif soit mobile selon les trois axes de translation,
◆ un dispositif de présentation 6 des demi-cônes 93, orientés dans leur position de montage et aptes à être saisis par le dispositif de montage 10,
◆ un distributeur 7 de demi-cônes 93 apte à alimenter le dispositif de présentation 6 par l'intermédiaire d'un tuyau flexible 7',
◆ une palette de présentation 8 des coupelles 92 et des ressorts 91 destinés à être saisis par le dispositif de montage 10.

De manière connue, cette ligne d'assemblage 1 permet de monter, sur chaque soupape 90 d'une culasse 9, un ressort de rappel 91, une coupelle 92 et deux demi-cônes 93. Les demi-cônes 93 comportent au moins une et généralement trois nervures 94 intérieures destinées à se loger dans au moins une et généralement trois rainures 95 extérieures et périphériques prévues dans la tige 96 de la soupape 90. Ces demi-cônes 93 sont destinés à se loger dans un alésage 97, généralement conique, formé dans la coupelle 92 montée sur la tige 96 de la soupape 90 en appui sur le ressort de rappel 91 associé à cette soupape 90. Selon le type de lignes d'assemblage 1, le montage des demi-cônes 93 est totalement automatisé alors que le montage des ressorts 91 et des coupelles 92 est soit manuel, semi-automatique ou automatique.

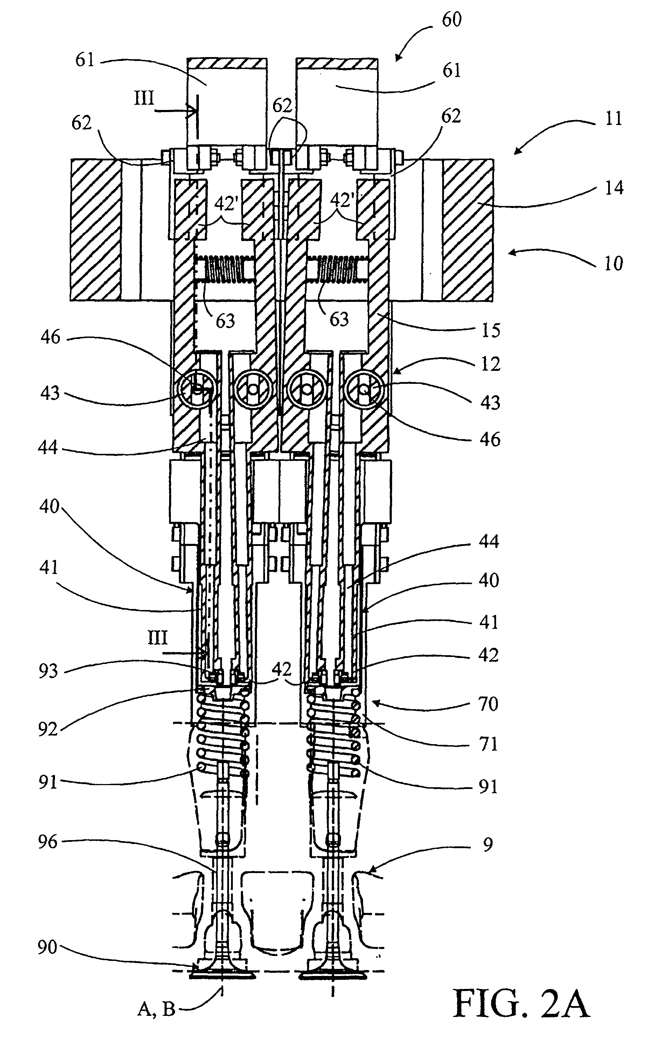

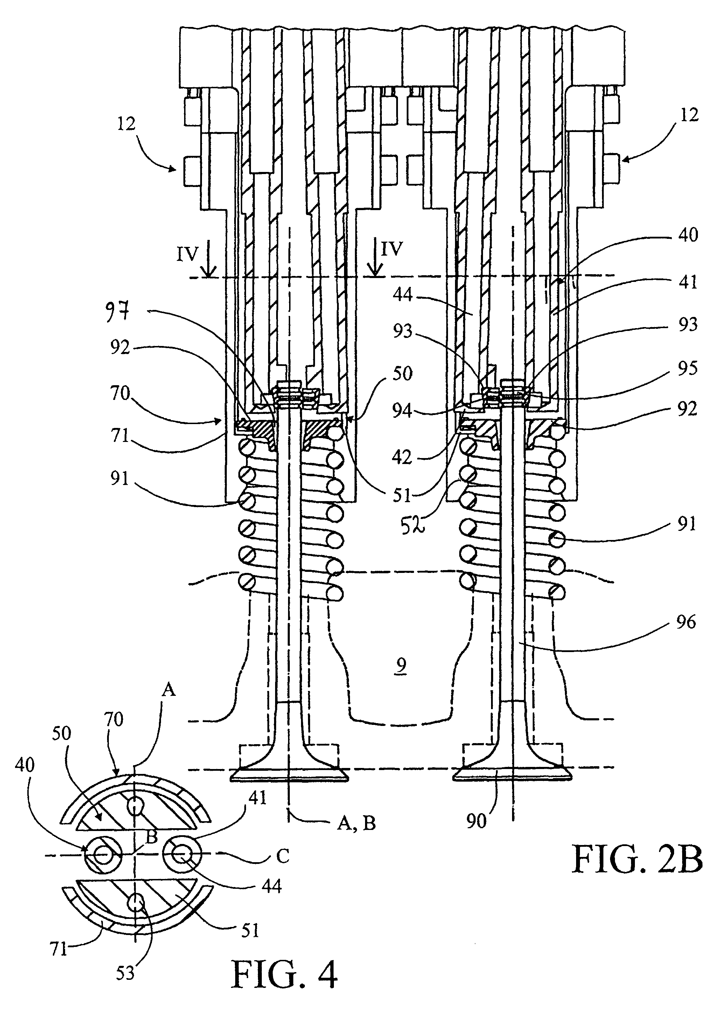

Le dispositif de montage 10 selon l'invention, décrit en référence aux figures 2 à 4, comporte une partie fixe 11 appelée porte-outil et agencée pour être montée sur le portique 5 de la ligne d'assemblage 1 ou machine d'assemblage et une partie amovible 12 appelée outil agencée pour être montée temporairement sur le porte-outil 11 et pour être interchangeable. La ligne d'assemblage 1 peut, par conséquent, être complétée par un magasin d'outils 13 sur lequel sont positionnés différents outils 12, correspondant, par exemple, à plusieurs diamètres de demi-cônes destinés à être montés sur des soupapes de diamètres différents ou à des outils multiples d'entraxes différents selon le type de culasses à équiper.

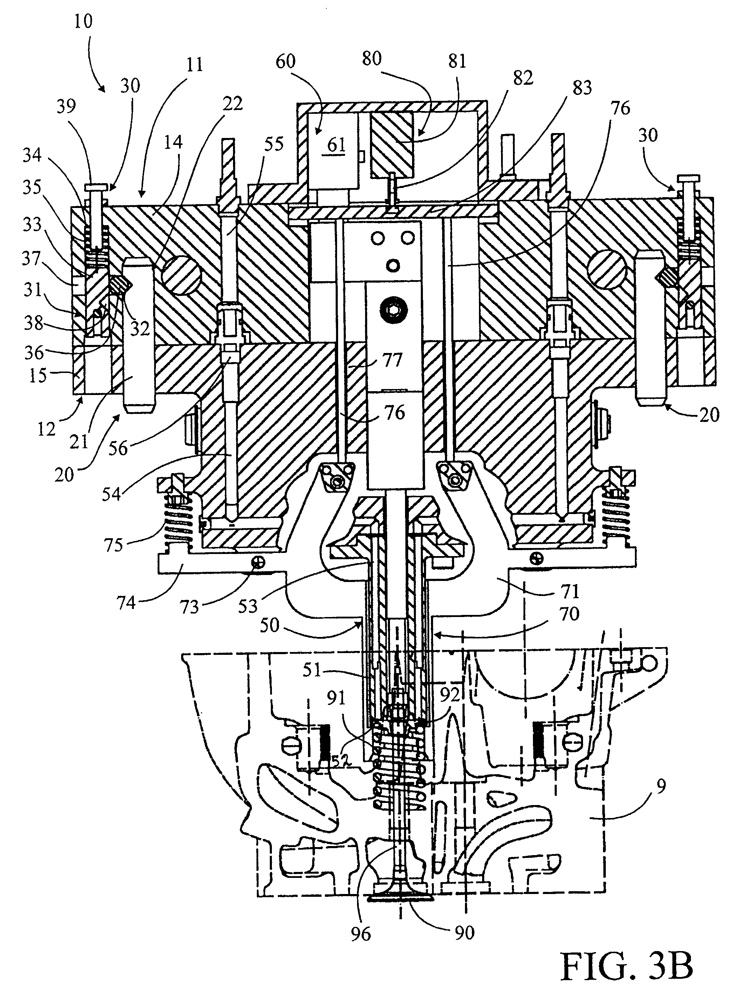

En référence particulièrement à la figure 3B, le dispositif de montage 10 comporte des moyens d'indexage 20 et de verrouillage 30 de l'outil 12 sur le porte-outil 11 de manière à positionner précisément cet outil par rapport aux soupapes 90 de la culasse 9 à équiper. Le porte-outil 11 comporte une plate-forme 14 présentant une surface plane apte à recevoir en appui plan l'outil 12, ce dernier comportant un corps 15 présentant également une surface plane en correspondance. Les moyens d'indexage 20 comportent, dans l'exemple représenté, deux doigts de positionnement 21 solidaires du corps 15 de l'outil 12 agencés pour se loger dans deux alésages 22 prévus dans la plate-forme 14 du porte-outil 11. Bien entendu, d'autres moyens d'indexage 20 peuvent également convenir.

Les moyens de verrouillage 30 comportent, dans l'exemple représenté, deux verrous 31 prévus dans la plate-forme 14 du porte-outil 11 et agencés pour se loger automatiquement dans deux gâches 32 solidaires de l'outil 12, chaque verrou 31 étant associé à un organe de déverrouillage (non représenté) permettant le démontage de l'outil 12. Chaque verrou 31 comporte un barillet 33 mobile axialement dans un alésage 34 disposé parallèlement et à proximité de chaque doigt de positionnement 21, ce barillet 33 étant assujetti à un ressort de rappel 35 et coopérant avec une bille de verrouillage 36. Un orifice 37 est ménagé dans la plate-forme 14 pour mettre en communication l'alésage 34 du barillet 33 avec l'alésage 22 du doigt de positionnement 21, cet orifice 37 abritant la bille de verrouillage 36. Un évidement constituant la gâche 32 est prévu en correspondance de cet orifice 37 dans le doigt de positionnement 21 et un évidement 38 similaire est prévu en correspondance dans le barillet 33, ces évidements 32, 38 étant agencés pour recevoir partiellement la bille de verrouillage 36. La figure 3B montre l'outil 12 en position verrouillée sur le porte-outil 11, la bille de verrouillage 36 étant bloquée dans la gâche 32 du doigt de positionnement 21 par le barillet 33 rappelé en position verrouillée par son ressort de rappel 35. L'outil 12 est ainsi rendu solidaire du porte-outil 11. Le barillet 33 est prolongé par une tige d'actionnement 39 accessible à l'extérieur de la plate-forme 14 du porte-outil 11 et destinée à être couplée à l'organe de déverrouillage (non représenté), comme par exemple un vérin, qui, en tirant sur cette tige 39, remonte le barillet 33 en position déverrouillée, en comprimant son ressort de rappel 35, jusqu'à ce que la bille de verrouillage 36 soit en regard de l'évidement 38 du barillet 33 et libère le doigt de positionnement 21 permettant le changement d'outil 12. Bien entendu, d'autres moyens de verrouillage 30 peuvent convenir, qu'ils soient manuels, semi-automatiques ou automatiques.

Le dispositif de montage 10, selon l'invention, comporte de manière connue une pince de préhension 40 des demi-cônes 93, une broche de poussée 50 agencée pour appuyer sur la coupelle 92 et comprimer le ressort de rappel 91 pour réaliser le montage desdits demi-cônes 93 et, des moyens de commande 60 de la pince de préhension 40, la pince de préhension 40 et la broche de poussée 50 étant coaxiales. La pince de préhension 40 et la broche de poussée 50 constituant les parties techniques du dispositif de montage 10 dont les dimensions et précisions sont déterminées exclusivement par celles des demi-cônes 93, sont rassemblées dans l'outil 12 amovible et interchangeable en fonction des pièces à monter. Par contre, les moyens de commande 60 de la pince de préhension 40 pouvant être communs à différents types de pince, sont rassemblés dans le porte-outil 11 fixe.

En référence aux figures 2A et 2B, la pince de préhension 40 des demi-cônes 93 est une pince à succion. Elle comporte deux doigts de préhension 41, identiques, disposés symétriquement par rapport à un premier plan médian A passant par l'axe B de l'outil et s'étendant au-delà dudit outil 12 dans le porte-outil 11. L'extrémité 42 de chaque doigt de préhension 41 destinée à saisir un demi-cône 93 comporte un évidement de forme complémentaire à celle du demi-cône 93 correspondant. Chaque doigt de préhension 41 est monté pivotant dans le corps 15 de l'outil 12 autour d'un axe de pivotement 43 fixe et sont actionnés par les moyens de commande 60 de la pince prévus dans le porte-outil 11 pour déplacer la pince de préhension 40 entre une position fermée et une position ouverte.

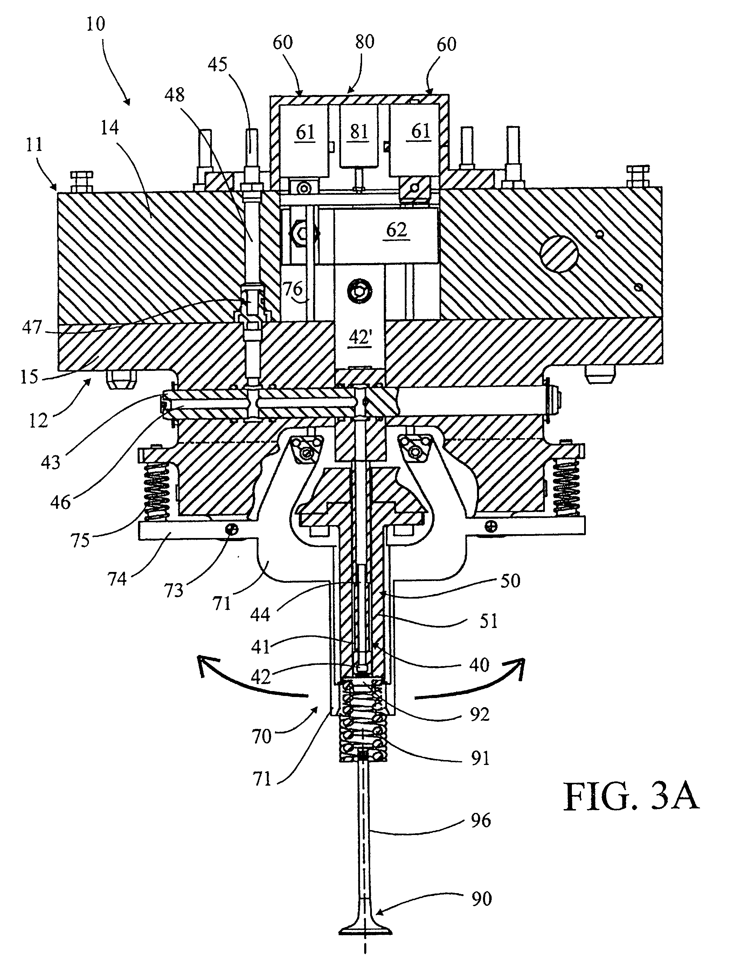

Chaque doigt de préhension 41 est traversé par un alésage intérieur 44 formant un conduit d'aspiration s'étendant depuis l'extrémité 42 du doigt destinée à saisir un demi-cône 93 par succion. Ce conduit d'aspiration doit être relié à une source de vide de préférence par une connexion fixe. A cet effet, il traverse l'axe de pivotement 43 du doigt de préhension 41 correspondant pour déboucher dans le corps 15 de l'outil 12, puis dans le porte-outil 11 pourvu d'un embout de raccordement 45. Plus particulièrement et comme illustré plus clairement par la figure 3A, chaque axe de pivotement 43 comporte un alésage intérieur 46 communiquant avec l'alésage intérieur 44 du doigt de préhension 41 correspondant. Ensuite, le corps 15 de l'outil 12 comporte un alésage intérieur 47 communiquant d'une part avec l'alésage intérieur 46 de l'axe de pivotement 43 et d'autre part avec un alésage 48 prévu en correspondance dans la plate-forme 14 du porte-outil 11 par un embout de raccordement 49. L'ensemble de ces alésages intérieurs, successifs et communicants forment le conduit d'aspiration d'un doigt de préhension 41, une partie 44 de ce conduit étant mobile avec le doigt de préhension 41, l'autre partie 46, 47, 48 étant fixe pour faciliter le raccordement entre l'outil 12 et le porte-outil 11 et entre le porte-outil 11 et la source de vide (non représentée). Ces différents alésages intérieurs ont une section prédéterminée choisie en fonction de la puissance d'aspiration nécessaire à l'extrémité 42 des doigts de préhension 41 pour garantir un bon maintien des demi-cônes 93. De même, ils sont conçus pour limiter les pertes de charge et éviter les risques de perturbations.

Les moyens de commande 60 de la pince de préhension 41 des demi-cônes 93 comportent, dans l'exemple représenté, une pince pneumatique disposée dans le porte-outil 11. Cette pince pneumatique 61 comporte de manière connue un vérin pneumatique 61 agencée pour déplacer en translation deux mors 62 parallèles. Ces mors 62 sont agencés pour encadrer les extrémités libres 42'des doigts de préhension 41 s'étendant dans le porte-outil 11 de manière à les rapprocher et placer la pince de préhension 40 en position ouverte. Un ressort de rappel 63 est disposé entre les doigts de préhension 41 et situé à un niveau entre les axes de pivotement 43 et le vérin pneumatique 61 pour éloigner les extrémités libres 42' de ces doigts de préhension 41 et replacer la pince de préhension 40 en position fermée.

Dans l'exemple représenté aux figures 3A et 3B, la broche de poussée 50 est évidée et forme deux profilés 51 identiques, parallèles, disposés symétriquement par rapport à un second plan médian C passant par l'axe B de l'outil 12 et perpendiculaire au premier plan médian A. Cette broche de poussée 50 est montée de manière fixe dans le corps 15 de l'outil 11. L'extrémité libre 52 des profilés 51 destinée à appuyer sur la coupelle 92 est évidée pour recouvrir partiellement cette coupelle 92 et la centrer par rapport à l'axe B de l'outil 12 confondu avec l'axe de la tige 96 de la soupape 90 en position montage. Dans cet exemple, cette broche de poussée 50 constitue également des moyens de préhension à succion de la coupelle 92. A cet effet, chaque profilé 51 est traversé par un alésage intérieur 53 formant un conduit d'aspiration s'étendant depuis l'extrémité libre 52 du profilé 51 destinée à appuyer sur la coupelle 92. Ce conduit d'aspiration est différent du conduit d'aspiration de la pince de préhension 40 des demi-cônes 93 étant donné que la puissance d'aspiration nécessaire n'est pas la même. Il est relié à une source de vide et traverse, par conséquent, le corps 15 de l'outil 12 au travers d'un alésage intérieur 54 communiquant d'une part avec l'alésage intérieur 53 du profilé 51 et d'autre part avec un alésage 55 prévu en correspondance dans la plate-forme 14 du porte-outil 11 par un embout de raccordement 56. L'ensemble de ces alésages intérieurs, successifs et communicants forment le conduit d'aspiration d'un profilé 51 de la broche de poussée 50. Ces différents alésages intérieurs ont une section prédéterminée choisie en fonction de la puissance d'aspiration nécessaire à l'extrémité libre 52 des profilés 51 pour garantir un bon maintien de la coupelle 92. De même, ils sont conçus pour limiter les pertes de charge et éviter les risques de perturbations.

Le dispositif de montage 10 de l'invention comporte, en plus, une pince de préhension 70 d'un ressort de rappel 91 et des moyens de commande 80 de cette pince, ladite pince de préhension 70 du ressort de rappel 91 étant coaxiale à la pince de préhension 40 des demi-cônes 93 et à la broche de poussée 50. Cette pince de préhension 70, dont les dimensions dépendent du ressort de rappel 91 à saisir, est disposée dans l'outil 12 alors que les moyens de commande 80 de cette pince, indépendants des dimensions du ressort, sont prévus dans le porte-outil 11.

Cette pince de préhension 70 du ressort de rappel 91 comporte deux mors de préhension 71, identiques, disposés symétriquement par rapport au second plan médian C. L'extrémité libre 72 de chaque mors de préhension 71 est profilée pour entourer au moins partiellement le ressort de rappel 91 sur une hauteur de quelques spires. Chaque mors de préhension 71 est monté pivotant dans le corps 15 de l'outil 12 autour d'un axe de pivotement 73 fixe et les moyens de commande 80 sont agencés pour déplacer la pince de préhension 70 du ressort 91 entre une position fermée et une position ouverte.

Chaque mors de préhension 71 comporte un bras de levier 74 s'étendant perpendiculairement au second plan médian C. Ce bras de levier 74 comporte l'axe de pivotement 73 et est assujetti à un organe de rappel 75, tel qu'un ressort de compression, disposé entre l'extrémité du bras de levier 74 et le corps 15 de l'outil 12. Cet organe de rappel 75 est agencé pour rapprocher les mors de préhension 71 et placer la pince 70 en position fermée. Chaque mors de préhension 71 est également articulé à une tige d'actionnement 76 se prolongeant dans le porte-outil 11 et les moyens de commande 80 de la pince de préhension 70 du ressort 91 sont agencés pour pousser ces tiges d'actionnement 76, dans l'axe B de l'outil 12, pour écarter les mors de préhension 71 et placer la pince 70 en position ouverte. Les moyens de commande 80 comportent, dans l'exemple représenté, un vérin 81 dont la tige 82 est couplée à une plaque d'appui 83 agencée pour appuyer sur les tiges d'actionnement 76 qui sont guidées en translation dans des alésages 77 traversant prévus dans le corps 15 de l'outil 12. L'axe de pivotement 73 de chaque mors de préhension 71 est situé sensiblement à égale distance du point d'application du ressort de rappel 75 et de la trajectoire des tiges d'actionnement 76.

La figure 4 montre clairement, par une coupe radiale de l'outil 12, la disposition des différents moyens de préhension 40, 50, 70 entre eux. De l'intérieur vers l'extérieur, on trouve les deux doigts de préhension 41 des demi-cônes 93 disposés symétriquement par rapport au premier plan médian A, ensuite les deux profilés 51 de la broche de poussée 50 et de préhension de la coupelle 92 disposés symétriquement par rapport au second plan médian C perpendiculaire au premier, puis les deux mors de préhension 71 du ressort 91 disposés symétriquement par rapport au second plan médian C. Ces trois moyens de préhension 40, 50, 70 sont donc coaxiaux et centrés sur l'axe B de l'outil 12, et sont agencés pour pouvoir s'introduire dans la culasse 3 pour monter simultanément le ressort 91, la coupelle 92 et les deux demi-cônes 93.

Le fonctionnement du dispositif de montage 10 selon l'invention est décrit comme suit. L'outil 12 est choisi dans le magasin d'outils 13 de la ligne d'assemblage 1 en fonction du moteur à équiper. Cet outil 12 est monté sur le porte-outil 11 automatiquement ou manuellement, en plaçant les doigts de positionnement 21 dans les alésages 22 correspondants puis en actionnant les verrous 31. Quand la culasse 9 est positionnée dans le barillet porte culasse 4 par le robot de préhension 2, le dispositif de montage 10 peut être activé. Ce dispositif de montage 10, mobile dans les trois axes de translation, se déplace pour chercher, dans un premier temps, deux demi-cônes 93 dans le dispositif de présentation 6 correspondant alimenté par des demi-cônes 93 pré-positionnés par paire dans une empreinte. Pour ce faire, il place l'axe B de l'outil 12 dans l'axe de l'empreinte dans laquelle se trouve la paire de demi-cônes 93, ouvre la pince de préhension 40, descend à la hauteur voulue puis referme la pince 40 sur les deux demi-cônes 93, en actionnant la source de vide pour maintenir les demi-cônes 93 par succion à l'extrémité 42 des doigts de préhension 41. Dans un second temps, ce dispositif de montage 10 se déplace pour chercher un ressort 91 et une coupelle 92 sur la palette de présentation 8 correspondante où les ressorts 91 et les coupelles 92 sont pré-positionnés par couple et superposés. Il place alors l'axe B de l'outil 12 dans l'axe du couple ressort/coupelle, ouvre la pince de préhension 70 du ressort, descend à la hauteur voulue puis referme la pince 70 sur le ressort 91, en actionnant la source de vide pour maintenir la coupelle par succion à l'extrémité 52 des profilés 51 de la broche de poussée 50. Il est bien entendu qu'en présence de la pince de préhension 70 qui permet de saisir simultanément le ressort 91 et la coupelle 92, la broche de poussée 50 n'est pas obligatoirement raccordée à une source de vide.

Le dispositif de montage 10 se déplace ensuite au-dessus de la culasse 9 pour venir monter l'ensemble formé par le ressort 91, la coupelle 92 et les demi-cônes 93 sur la tige 96 d'une soupape 90. Il place alors l'axe B de l'outil 12 dans l'axe de la soupape 90, ouvre la pince de préhension 40 des demi-cônes 93, descend à la hauteur voulue c'est-à-dire jusqu'à ce que les nervures 94 intérieures des demi-cônes 93 soient en face des rainures 95 extérieures de la tige 96 de soupape. Pendant cette phase descendante, une fois le ressort de rappel 91 en appui dans la culasse 9, celui-ci va se comprimer par appui de la broche de poussée 50 sur la coupelle 92. Quand la hauteur voulue est atteinte, le dispositif de montage 10 referme la pince de préhension 40 des demi-cônes pour plaquer ces demi-cônes 93 contre la tige 96 de la soupape 90, coupe la source de vide pour interrompre la succion à l'extrémité des doigts de préhension 41 et maintient cette pince 40 en position fermée. Sur les figures 2A et 2B, les deux doigts de préhension 41 de chaque pince de préhension 40 sont représentés volontairement un en position pince ouverte et l'autre en position pince fermée. Le dispositif de montage 10 ouvre ensuite la pince de préhension 70 du ressort 91, coupe la source de vide pour interrompre la succion à l'extrémité de la broche de poussée 50 puis remonte jusqu'à dégager complètement l'outil 12 de la culasse 9. Pendant cette phase de remontée, la broche de poussée 50 relâche son appui et le ressort de rappel 91 se détend, faisant remonter la coupelle 92 jusqu'à venir coiffer et bloquer les demi-cônes 93 sur la tige 96. La rotation des doigts de préhension 41 de la pince de préhension 40 autour de l'axe de pivotement 43 leur permet d'échapper aux demi-cônes 93 tout en garantissant leur maintien dans les rainures 95 de la tige 96 de soupape jusqu'à recouvrement par la coupelle 92.

Il apparaît clairement de cette description que l'invention permet d'atteindre les buts fixés. De plus, le fait de prévoir dans le porte-outil 11 les moyens de commande 60, 80 des différentes pinces de préhension 40, 70 a l'avantage de réduire considérablement la masse et les dimensions de l'outil 12. Ainsi, l'outil 12 a un coût de réalisation très réduit et son montage de même que ses réglages sont nettement simplifiés. Par ailleurs, le fait de faire passer les conduits d'aspiration de la pince de préhension 40 des demi-cônes 93 par les axes de pivotement 43 fixes a l'avantage de simplifier les connexions à la source de vide, puisque ces connexions sont statiques. Ainsi, ces connexions peuvent être réalisées par des raccords rapides qui sont simples, économiques et fiables. Enfin grâce à la conception optimale du dispositif de montage 10 qui permet de limiter l'encombrement radial de l'outil 12, ce dispositif peut avantageusement comporter plusieurs outils identiques, montés en parallèle et séparés d'un entraxe correspondant à l'entraxe des soupapes 30 à monter, afin de réduire les temps de cycle d'assemblage. Un exemple est illustré par les figures 2A et 2B dans lesquelles le dispositif de montage 10 est équipé de deux outils 12.

Le dispositif de montage 10, tel qu'il est décrit et représenté sur les figures, permet le montage en mode automatique des demi-cônes 93 et simultanément du ressort de rappel 91 et de la coupelle 92. Selon les besoins, la pince de préhension 70 du ressort de rappel 91 peut être proposée en option, de même que le raccordement à une source de vide pour la broche de poussée 50, ce qui augmente encore la flexibilité du dispositif de montage 10 de l'invention.

## Revendications

1. Dispositif de montage (10) automatique de deux demi-cônes (93) sur une tige (96) de soupape (90), ce dispositif étant agencé pour être monté sur une machine d'assemblage, ces demi-cônes (93) comportant au moins une nervure (94) intérieure destinée à se loger dans au moins une rainure (95) extérieure de ladite tige, ces demi-cônes (93) étant agencés pour se loger dans un alésage (97) formé dans une coupelle (92) montée sur ladite tige (96) et en appui sur un ressort de rappel (91) associé à ladite soupape (90), ce dispositif comportant au moins une pince de préhension (40) des demi-cônes (93), une broche de poussée (50) agencée pour appuyer sur ladite coupelle (92) et comprimer ledit ressort de rappel (91) pour réaliser le montage desdits demi-cônes (93), et des moyens de commande (60) de ladite pince de préhension (40), ladite pince de préhension (40) et ladite broche de poussée (50) étant coaxiales, **caractérisé en ce qu'**il comporte une partie fixe, appelée porte-outil (11), agencée pour être montée sur ladite machine d'assemblage et une partie amovible, appelée outil (12), agencée pour être montée temporairement sur ledit porte-outil (11) et pour être interchangeable, ledit outil (12) comportant un corps (15) dans lequel sont montés au moins ladite pince de préhension (40) et ladite broche de poussée (50) et ledit porte-outil (11) comportant une plate-forme (14) dans laquelle sont montés au moins lesdits moyens de commande (60) de la pince de préhension (40).

2. Dispositif selon la revendication 1, **caractérisé en ce qu'**il comporte des moyens d'indexage (20) et de verrouillage (30) dudit outil (12) sur ledit porte-outil (11).

3. Dispositif selon la revendication 2, **caractérisé en ce que** les moyens d'indexage (20) comportent au moins un doigt de positionnement (21) solidaire de l'outil ou du porte-outil et agencé pour se loger dans au moins un alésage (22) prévu respectivement dans le porte-outil ou l'outil.

4. Dispositif selon la revendication 2, **caractérisé en ce que** les moyens de verrouillage (30) comportent au moins un verrou (31) solidaire de l'outil ou du porte-outil et agencé pour se loger dans au moins une gâche (32) prévue respectivement dans le porte-outil ou l'outil quand ledit outil (12) est monté sur ledit porte-outil (11), ce verrou (31) étant associé à un organe de déverrouillage agencé pour retirer ledit verrou (31) de ladite gâche (32) et permettre le démontage dudit outil (12).

5. Dispositif selon la revendication 4, **caractérisé en ce que** le verrou (31) comporte au moins un barillet (33) mobile agencé pour déplacer au moins une bille (36) dans ladite gâche (32).

6. Dispositif selon la revendication 1, **caractérisé en ce que** la pince de préhension (40) comporte deux doigts de préhension (41), identiques, disposés symétriquement par rapport à un premier plan médian (A) passant par l'axe (B) de l'outil et s'étendant au-delà dudit outil (12) dans ledit porte-outil (11), chaque doigt de préhension (41) étant monté pivotant dans ledit corps (15) de l'outil autour d'un axe de pivotement (43) fixe.

7. Dispositif selon la revendication 6, **caractérisé en ce que** ladite pince de préhension (40) est constituée d'une pince à succion, chaque doigt de préhension (41) étant traversé par au moins un alésage intérieur (44) formant un conduit d'aspiration agencé pour être relié à une source de vide.

8. Dispositif selon la revendication 7, **caractérisé en ce que** chaque axe de pivotement (43) comporte au moins un alésage intérieur (46) agencé pour être en communication avec l'alésage intérieur (44) du doigt de préhension (41) correspondant, et **en ce que** le corps (15) dudit outil (12) comporte aussi au moins un alésage intérieur (47) agencé pour être en communication d'une part avec l'alésage intérieur (46) dudit axe de pivotement (43) et d'autre part avec un alésage (48) prévu en correspondance dans la plate-forme (14) dudit porte-outil (11) et relié à ladite source de vide, l'ensemble de ces alésages intérieurs formant un conduit d'aspiration.

9. Dispositif selon la revendication 6, **caractérisé en ce que** les moyens de commande (60) de ladite pince de préhension (40) sont agencés pour rapprocher les extrémités libres (42') des doigts de préhension (41) s'étendant dans ledit porte-outil (11) et placer la pince de préhension (40) en position ouverte, lesdits doigts de préhension (41) étant assujettis à au moins un organe de rappel (63) disposé entre eux et agencés pour éloigner lesdites extrémités libres (42') des doigts de préhension et replacer la pince de préhension (40) en position fermée.

10. Dispositif selon la revendication 9, **caractérisé en ce que** les moyens de commande (60) comportent au moins une pince pneumatique (61) disposée dans ledit porte-outil (11) et dont les mors (62) encadrent lesdites extrémités libres (42') correspondantes des doigts de préhension (41).

11. Dispositif selon la revendication 6, **caractérisé en ce que** ladite broche de poussée (50) est évidée et forme deux profilés (51) identiques, disposés symétriquement par rapport à un second plan médian (C) passant par l'axe (B) de l'outil (12) et perpendiculaire audit premier plan médian (A), ladite broche de poussée (50) étant montée de manière fixe dans ledit corps (15) de l'outil (12).

12. Dispositif selon la revendication 11, **caractérisé en ce que** ladite broche de poussée (50) est agencée pour former des moyens de préhension à succion d'une coupelle (92) associée auxdits demi-cônes (93), chaque profilé (51) étant traversé par au moins un alésage intérieur (53) formant un conduit d'aspiration agencé pour être relié à une source de vide.

13. Dispositif selon la revendication 12, **caractérisé en ce que** le corps (15) de l'outil (12) comporte au moins un alésage intérieur (54) agencé pour être en communication d'une part avec l'alésage intérieur (53) du profilé (51) correspondant et d'autre part avec un alésage (55) prévu en correspondance dans la plate-forme (14) dudit porte-outil (11) et relié à ladite source de vide, l'ensemble de ces alésages intérieurs formant un conduit d'aspiration.

14. Dispositif selon la revendication 1, **caractérisé en ce qu'**il comporte une pince de préhension (70) d'un ressort (91) associé auxdits demi-cônes (93) et des moyens de commande (80) de cette pince, ladite pince de préhension (70) du ressort (91) étant coaxiale à ladite pince de préhension (40) des demi-cônes (93) et à la dite broche de poussée (50), ledit outil (12) comportant ladite pince (70) et ledit porte-outil (11) comportant lesdits moyens de commande (80).

15. Dispositif selon les revendications 11 et 14, **caractérisé en ce que** ladite pince de préhension (70) du ressort (91) comporte deux mors de préhension (71), identiques, disposés symétriquement par rapport au second plan médian (C), chaque mors de préhension (71) étant monté pivotant dans ledit corps (15) de l'outil (12) autour d'un axe de pivotement (73) fixe.

16. Dispositif selon la revendication 15, **caractérisé en ce que** chaque mors de préhension (71) comporte un bras de levier (74) s'étendant perpendiculairement au second plan médian (C), ce bras de levier (74) comportant ledit axe de pivotement (73) et étant assujetti à un organe de rappel (75) par rapport au corps (15) de l'outil (12) agencé pour rapprocher lesdits mors de préhension (71) et placer ladite pince (70) en position fermée.

17. Dispositif selon la revendication 16, **caractérisé en ce que** chaque mors de préhension (71) est articulé à une tige d'actionnement (76) se prolongeant dans ledit porte-outil (11) et **en ce que** les moyens de commande (80) de ladite pince de préhension (70) du ressort sont agencés pour pousser lesdites tiges d'actionnement (76), dans l'axe (B) dudit outil, écarter lesdits mors de préhension (71) et placer la pince (70) en position ouverte.

18. Dispositif selon la revendication 17, **caractérisé en ce que** lesdits moyens de commande (80) comportent au moins un vérin (81) dont la tige (82) est couplée à une plaque d'appui (83) agencée pour appuyer sur lesdites tiges d'actionnement (76).

## Claims

1. Device (10) for automatically assembling two half-cones (93) on a valve (90) stem (96), which device is so arranged as to be mounted on an assembly machine, which half-cones (93) comprise at least one interior rib (94) intended to engage in at least one external groove (95) in the aforementioned stem, which half-cones (93) are so arranged as to engage in a bore (97) formed in a dish (92) assembled on the aforementioned stem (96) and supported on a return spring (91) associated with the aforementioned valve (90), which device comprises at least one holding grip (40) for the half-cones (93), a thrust pin (50) so arranged as to push against the aforementioned dish (92) and to compress the aforementioned return spring (91) in order to realize the assembly of the aforementioned half-cones (93), and means (60) for the control of the aforementioned holding grip (40), whereby the holding grip (40) and the thrust pin (50) are coaxial, ***characterized in that*** it comprises a fixed part, referred to as the tool holder (11), so arranged as to be mounted on the aforementioned assembly machine, and a moving part, referred to as the tool (12), so arranged as to mounted temporarily on the aforementioned tool holder (11) and as to be interchangeable, whereby the aforementioned tool (12) comprises a body (15) in which are mounted at least the aforementioned holding grip (40) and the aforementioned thrust pin (50) and the aforementioned tool holder ( 11 ) comprising a platform (14) in which are mounted at least the aforementioned means (60) for the control of the aforementioned holding grip (40).

2. Device in accordance with Patent Claim 1, ***characterized in that*** it comprises means for the indexing (20) and locking (30) of the aforementioned tool (12) on the aforementioned tool holder (11).

3. Device in accordance with Patent Claim 2, **characterized in that** the indexing means (20) comprise at least one positioning finger (21) immovably attached to the tool or to the tool holder and so arranged as to engage in at least one bore (22) provided respectively in the tool holder or the tool.

4. Device in accordance with Patent Claim 2, ***characterized in that*** the locking means (30) comprise at least one bolt (31) immovably attached to the tool or to the tool holder and so arranged as to engage in at least one striking plate (32) provided respectively in the tool holder or the tool when the aforementioned tool (12) is mounted on the aforementioned tool holder (11), which bolt (31) is associated with an unlocking device so arranged as to retract the aforementioned bolt (31) from the aforementioned striking plate (32) and to permit dismantling of the aforementioned tool (12).

5. Device in accordance with Patent Claim 4, ***characterized in that*** the bolt (31) comprises at least one mobile cylinder (33) so arranged as to displace at least one ball (36) in the aforementioned striking plate (32).

6. Device in accordance with Patent Claim 1, ***characterized in that*** the holding grip (40) comprises two holding fingers (41), which are identical, arranged symmetrically in relation to a first median plane (A) passing through the axis (B) of the tool and extending beyond the aforementioned tool (12) into the aforementioned tool holder (11), whereby each holding finger (41) is pivotally mounted in the aforementioned body (15) of the tool about a fixed pivot shaft (43).

7. Device in accordance with Patent Claim 6, ***characterized in that*** the aforementioned holding grip (40) comprises a suction grip, whereby each holding finger (41) is traversed by at least one internal bore (44) forming a suction pipe so arranged as to be connected to a vacuum source.

8. Device in accordance with Patent Claim 7, **characterized in that** each pivot shaft (43) comprises at least one internal bore (46) so arranged as to be in communication with the internal bore (44) of the corresponding holding finger (41 ), and, as regards the body (15) of the aforementioned tool (12), also comprises at least one internal bore (47) so arranged as to be in communication, on the one hand, with the internal bore (46) of the aforementioned pivot shaft (43) and, on the other hand, with a bore (48) provided in correspondence in the platform (14) of the aforementioned tool holder ( 11 ) and connected to the aforementioned vacuum source, whereby the entirety of these internal bores together form a suction pipe.

9. Device in accordance with Patent Claim 6, ***characterized in that*** the control means (60) for the aforementioned holding grip (40) are so arranged as to bring together the free extremities (42') of the holding fingers (41) extending into the aforementioned tool holder (11) and to place the holding grip (40) in the open position, whereby the aforementioned holding fingers (41) are subjected to at least one return device (63) positioned between them and so arranged as to move apart the aforementioned free extremities (42') of the holding fingers and to replace the holding grip (40) in the closed position.

10. Device in accordance with Patent Claim 9, ***characterized in that*** the control means (60) comprise at least one pneumatic grip (61) positioned in the aforementioned tool holder (11), of which the jaws (62) surround the aforementioned corresponding free extremities (42') of the holding fingers (41 ).

11. Device in accordance with Patent Claim 6, ***characterized in that*** the aforementioned thrust pin (50) is hollow and forms two identical sections (51), arranged symmetrically in relation to a second median plane (C) passing through the axis (B) of the tool (12) and perpendicular to the aforementioned first median plane (A), whereby the thrust pin (50) is mounted in a fixed manner in the aforementioned body (15) of the tool ( 12).

12. Device in accordance with Patent Claim 11, ***characterized in that*** the aforementioned thrust pin (50) is so arranged as to form means for the gripping by suction of a dish (92) associated with the aforementioned half-cones (93), whereby each section (51) is traversed by at least one internal bore (53) forming a suction tube so arranged as to be connected to a vacuum source.

13. Device in accordance with Patent Claim 12, ***characterized in that*** the body (15) of the tool (12) comprises at least one internal bore (54) so arranged as to be in communication, on the one hand, with the internal bore (53) of the corresponding section (51) and, on the other hand, with a bore (55) provided in correspondence in the platform (14) of the aforementioned tool holder (11) and connected to the aforementioned vacuum source, whereby the entirety of these internal bores together form a suction pipe.

14. Device in accordance with Patent Claim 1, ***characterized in that*** it comprises a holding grip (70) for a spring (91) associated with the aforementioned half-cones (93) and means (80) for controlling this grip, whereby the holding grip (70) for the spring (91) is coaxial with the aforementioned holding grip (40) for the half-cones (93) and with the aforementioned thrust pin (50), whereby the aforementioned tool (12) comprises the aforementioned grip (70) and the aforementioned tool holder (11) comprises the aforementioned control means (80).

15. Device in accordance with Patent Claims 11 and 14, ***characterized in that*** the aforementioned holding grip (70) for the spring (91) comprises two holding jaws (71), which are identical, arranged symmetrically in relation to the second median plane (C), whereby each holding jaw (71) is pivotally mounted in the aforementioned body (15) of the tool (12) about a fixed pivot shaft (73).

16. Device in accordance with Patent Claim 15, ***characterized in that*** each holding jaw (71) comprises a lever arm (74) extending perpendicularly to the second median plane (C), which lever arm (74) comprises the aforementioned pivot shaft (73) and is subjected to one return device (75) in relation to the body (15) of the tool (12) so arranged as to move the aforementioned holding jaws (71) towards one another and to place the aforementioned holding grip (70) in the closed position.

17. Device in accordance with Patent Claims 16, ***characterized in that*** each holding jaw (71) is articulated with an actuating rod (76) extending into the aforementioned tool holder (11), and **in that** the means (80) of controlling the aforementioned holding grip (70) for the spring are so arranged as to displace the aforementioned actuating rods (76) in the axis (B) of the aforementioned tool, to open the aforementioned holding jaws (71) and to place the grip (70) in the open position.

18. Device in accordance with Patent Claim 17, ***characterized in that*** the aforementioned control means (80) comprise at least one piston (81), of which the rod (82) is attached to a thrust plate (83) so arranged as to push against the aforementioned actuating rods (76).

## Patentansprüche

1. Automatische Montagevorrichtung (10) für zwei Klemmkegel (93) auf der Stange (96) eines Ventils (90), wobei die Vorrichtung angeordnet ist, um auf einer Montagemaschine angebracht zu werden, wobei die Klemmkegel (93) mindestens eine Innenrippe (94) aufweisen, die dazu bestimmt ist, in mindestens einer Außennut (95) der Stange aufgenommen zu werden, wobei die zwei Klemmkegel (93) angeordnet sind, um in einer Bohrung (97) aufgenommen zu werden, die in einer auf der Stange (96) angebrachten Schale (92) angebracht ist, die auf einer mit dem Ventil (90) verbundenen Rückholfeder (91) aufliegt, wobei die Vorrichtung mindestens eine Greifzange (40) fiir die Klemmkegel (93), eine Druckstange (50) zur Ausübung von Druck auf die Schale (92) und zum Zusammendrücken der Rückholfeder (91) aufweist, um die Montage der Klemmkegel (93) durchzuführen, und Steuerungseinrichtungen (60) zum Steuern der Greifzange (40) aufweist, wobei die Greifzange (40) und die Druckstange (50) koaxial zueinander angeordnet sind, **dadurch gekennzeichnet, dass** sie einen Werkzeugträger (11) genannten, feststehenden Teil aufweist, der angeordnet ist, um auf der Montagemaschine angebracht zu werden, und einen Werkzeug (12) genannten, beweglichen Teil aufweist, der angeordnet ist, um vorübergehend auf dem Werkzeugträger (11) so angebracht zu werden, dass er austauschbar ist, wobei das Werkzeug (12) einen Körper (15) umfasst, in welchem mindestens die Greifzange (40) und die Druckstange (50) angebracht sind, wobei der Werkzeugträger (11) mindestens eine Plattform (14) aufweist, in welcher mindestens die Steuerungseinrichtungen (60) der Greifzange (40) angebracht sind.

2. Vorrichtung nach Anspruch 1, **dadurch gekennzeichnet, dass** sie Indexierungs- (20) und Arretierungseinrichtungen (30) für das Werkzeug (12) auf dem Werkzeugträger (11) aufweist.

3. Vorrichtung nach Anspruch 2, **dadurch gekennzeichnet, dass** die Indexierungseinrichtungen (20) mindestens einen fest mit dem Werkzeug oder mit dem Werkzeugträger verbundenen Positionierungsfinger (21) aufweisen, welcher angeordnet ist, um in mindestens einer, jeweils in dem Werkzeugträger oder dem Werkzeug vorgesehenen Bohrung (22) aufgenommen zu werden.

4. Vorrichtung nach Anspruch 2, **dadurch gekennzeichnet, dass** die Arretierungseinrichtungen (30) mindestens einen Riegel (31) aufweisen, welcher fest mit dem Werkzeug oder dem Werkzeugträger verbunden, und angeordnet ist, um in mindestens einem jeweils in dem Werkzeugträger oder Werkzeug vorgesehenen Schließelement (32) aufgenommen zu werden, wenn das Werkzeug (12) auf dem Werkzeugträger (11) angebracht wird, wobei der Riegel (31) so mit einem Entriegelungselement verbunden ist, dass der Riegel (31) von dem Schließelement (32) zurückgezogen wird und die Demontage des Werkzeuges (12) ermöglicht.

5. Vorrichtung nach Anspruch 4, **dadurch gekennzeichnet, dass** der Riegel (31) mindestens einen beweglichen Zylinder (33) aufweist, der angeordnet ist, um mindestens eine Kugel (36) in das Schließelement (32) zu verlagern.

6. Vorrichtung nach Anspruch 1, **dadurch gekennzeichnet, dass** die Greifzange (40) zwei identische Greiffinger (41) aufweist, die im Verhältnis zu einer mittleren Ebene (A) symmetrisch angeordnet sind, die durch die Achse (B) des Werkzeuges verläuft und sich über das Werkzeug (12) in dem Werkzeugträger (11) hinaus erstreckt, wobei jeder Greiffinger (41) in dem Körper (15) des Werkzeuges um eine feststehende Schwenkachse (43) drehbar angebracht ist.

7. Vorrichtung nach Anspruch 6, **dadurch gekennzeichnet, dass** die Greifzange (40) aus einer Saugzange besteht, wobei jeder Greiffinger (41) von mindestens einer Innenbohrung (44) durchquert wird, die einen Ansaugkanal bildet, der angeordnet ist, um mit einer Vakuumquelle verbunden zu werden.

8. Vorrichtung nach Anspruch 7, **dadurch gekennzeichnet, dass** jede Schwenkachse (43) mindestens eine Innenbohrung (46) aufweist, die angeordnet ist, um mit der Innenbohrung (44) des entsprechenden Greiffingers (41) in Verbindung zu stehen, und dass der Körper (15) des Werkzeuges (12) außerdem mindestens eine Innenbohrung (47) aufweist, die angeordnet ist, um einerseits mit der Innenbohrung (46) der Schwenkachse (43) und andererseits mit einer damit übereinstimmenden, in der Plattform (14) des entsprechenden Werkzeugträgers (11) vorgesehenen, und mit der Vakuumquelle verbundenen Bohrung (48) in Verbindung zu stehen, wobei die Gesamtheit der Innenbohrungen einen Ansaugkanal bildet.

9. Vorrichtung nach Anspruch 6, **dadurch gekennzeichnet, dass** die Steuerungseinrichtungen (60) der Greifzange (40) so angeordnet sind, das sie die freien äußersten Enden (42') der Greiffinger (41) annähern, die sich in dem Werkzeugträger (11 ) erstrecken, und die Greifzange (40) in eine geöffnete Position bringen, wobei die Greiffinger (41) an mindestens einem Rückholelement (63) gut befestigt sind, das zwischen denselben angeordnet ist, und die angeordnet sind, um die freien äußersten Enden (42') der Greiffmger zu entfernen und die Greifzange (40) wieder in eine geschlossene Position zu bringen.

10. Vorrichtung nach Anspruch 9, **dadurch gekennzeichnet, dass** die Steuerungseinrichtungen (60) mindestens eine in dem Werkzeugträger (11) angeordnete Druckluftzange (61) aufweisen, deren Spannbacken (62) die entsprechenden, freien äußersten Enden (42') der Greiffinger (41) einrahmen.

11. Vorrichtung nach Anspruch 6, **dadurch gekennzeichnet, dass** die Druckstange (50) ausgehöhlt ist und zwei identische Profilstähle (51) aufweist, die im Verhältnis zu einer zweiten mittleren Ebene (C) symmetrisch angeordnet sind, die durch die Achse (B) des Werkzeuges (12), und senkrecht zu der ersten mittleren Ebene (A) verläuft, wobei die Druckstange (50) in dem Körper (15) des Werkzeuges (12) fest angebracht ist.

12. Vorrichtung nach Anspruch 11, **dadurch gekennzeichnet, dass** die Druckstange (50) angeordnet ist, um Sauggreifrichtungen einer mit den Klemmkegeln (93) verbundenen Schale (92) zu bilden, wobei jeder Profilstahl (51) von mindestens einer Innenbohrung (53) durchquert wird, die einen Ansaugkanal bildet, der angeordnet ist, um mit einer Vakuumquelle verbunden zu werden.

13. Vorrichtung nach Anspruch 12, **dadurch gekennzeichnet, dass** der Körper (15) des Werkzeuges (12) außerdem mindestens eine Innenbohrung (54) aufweist, die angeordnet ist, um einerseits mit der Innenbohrung (53) des entsprechenden Profilstahls (51) und andererseits mit einer damit übereinstimmenden, in der Plattform (14) des entsprechenden Werkzeugträgers (11) vorgesehenen, und mit der Vakuumquelle verbundenen Bohrung (55) in Verbindung zu stehen, wobei die Gesamtheit der Innenbohrungen einen Ansaugkanal bildet.

14. Vorrichtung nach Anspruch 1, **dadurch gekennzeichnet, dass** sie eine Greifzange (70) einer mit den Klemmkegeln (93) verbundenen Feder (91) und Steuereinrichtungen (80) der Zange aufweist, wobei die Greifzange (70) der Feder (91) koaxial zu der Greifzange (40) der Klemmkegel (93) und zu der Druckstange (50) angeordnet ist, wobei das Werkzeug (12) die Zange (70) und den die Steuerungseinrichtungen (80) aufweisenden Werkzeugträger (11) umfasst.

15. Vorrichtung nach den Ansprüchen 11 und 14, **dadurch gekennzeichnet, dass** die Greifzange (70) der Feder (91) zwei identische Spannbacken (71) aufweist, die im Verhältnis zu der zweiten mittleren Ebene (C) symmetrisch angeordnet sind, wobei jede Spannbacke (71) in dem Körper (15) des Werkzeuges (12) um eine feststehende Schwenkachse (73) drehbar angebracht ist.

16. Vorrichtung nach Anspruch 15, **dadurch gekennzeichnet, dass** jede Spannbacke (71) einen sich senkrecht zu der zweiten mittleren Ebene (C) erstreckenden Hebelarm (74) aufweist, wobei der Hebelarm (74) die Schwenkachse (73) aufweist und an mindestens einem Rückholelement (75) im Verhältnis zu dem Körper (15) des Werkzeuges (12) gut befestigt ist, und welches angeordnet ist, um die Spannbacken (71) anzunähern und die Greifzange (70) in eine geschlossene Position zu bringen.

17. Vorrichtung nach Anspruch 16, **dadurch gekennzeichnet, dass** jede Spannbacke (71) an einer sich in den Werkzeugträger (11) verlängernden Betätigungsstange (76) gelenkig gelagert ist, und dass die Steuereinrichtungen (80) der Greifzange (70) der Feder angeordnet sind, um auf die Betätigungsstange (76) auf der Achse (B) des Werkzeuges eine Schubkraft auszuüben, die Spannbacken (71) zu spreizen und die Greifzange (70) in eine offene Position zu bringen.

18. Vorrichtung nach Anspruch 17, **dadurch gekennzeichnet, dass** die Steuerungseinrichtungen (80) mindestens einen Zylinder (81) umfassen, dessen Stange (82) mit einer Auflageplatte (83) verbunden ist, die angeordnet ist, um auf den Betätigungsstangen (76) aufzuliegen.
